# EUROPEAN PATENT APPLICATION

(11) **EP 4 810 282 A1**
(43) Date of publication of application: **23.09.2026**
(21) Application number: 26164872.9
(22) Date of filing: 16.03.2026
(51) Int. Cl.: B60H 1/00

(54) **INTERFACE ASSEMBLY FOR A HEAT PUMP AIR CONDITIONING SYSTEM**

(30) Priority: 20.03.2025 IT 202500005721
(71) Applicant: DENSO THERMAL SYSTEMS S.p.A., 10046 Poirino (Torino) (IT)
(72) Inventor: MAGNO, Giuseppe, I-10046 POIRINO (Torino) (IT); PONZETTO, Marco, I-10046 POIRINO (Torino) (IT)
(74) Representative: Vanzini, Christian

(57) **Abstract**

Interface assembly for a heat pump air conditioning system, comprising a manifold body (110) and a connection block (120), wherein the connection block (120) comprises a plurality of first fluid passage openings and a plurality of second fluid passage openings, wherein respective tubes (41, 42, 52) are welded to the first fluid passage openings for connection to an evaporator and to an inner condenser, wherein the second fluid passage openings are arranged on an upper face (120a) of the connection block (120) and are surrounded by respective collar protrusions, and wherein a respective gasket is arranged around each collar protrusion, wherein the connection block (120) and the manifold body (110) are tightened to each other by means of a screw (130), so that the gaskets are pressed between the upper face (120a) of the connection block (120) and a lower face (110a) of the manifold body (110).

## Description

The present invention relates to heat pump air conditioning systems for motor vehicles.

As is known, the use of heat pump air conditioning systems entails the installation of a high number of components and related tubing inside the motor compartment of the motor vehicle, with consequent issues in terms of size. In this regard, interface assemblies for heat pump air conditioning systems are known for example from FR 3151079 A1, EP 4296549 A1 and EP 4321356 A1.

An object of the invention is to provide a solution which can contribute to reducing the space requirements of the air conditioning system inside the motor compartment.

Such an object is achieved according to the invention by an interface assembly for a heat pump air conditioning system, comprising a manifold body having a plurality of fluid paths formed therein, and a connection block fastened to the manifold body,
wherein the connection block comprises a plurality of first fluid passage openings and a plurality of second fluid passage openings respectively connected to the first fluid passage openings, in which respective tubes are welded to the first fluid passage openings for connection to an evaporator and to an inner condenser of the heat pump air conditioning system, in which the second fluid passage openings are arranged on an upper face of the connection block and are surrounded by respective collar protrusions protruding from the upper face of the connection block, and in which a respective gasket is arranged around each collar protrusion, on the upper face of the connection block,
wherein the manifold body comprises a plurality of third fluid passage openings and a plurality of fourth fluid passage openings, the third fluid passage openings and the fourth fluid passage openings being connected to the plurality of fluid paths formed in the manifold body, in which the fourth fluid passage openings are configured to be connected to an accumulator, to a compressor, and to an external heat exchanger of the heat pump air conditioning system, in which the third fluid passage openings are arranged on a lower face of the manifold body and are configured as holes for receiving the collar protrusions of the second fluid passage openings,
wherein the connection block and the manifold body are tightened to each other by means of at least one screw extending orthogonally to the upper face of the connection block and to the lower face of the manifold body, so that the gaskets are pressed between the upper face of the connection block and the lower face of the manifold body.

The proposed solution makes it possible to compact a certain number of connections and fluidic connections within the space of the interface assembly, reducing, in particular, the number of tubes required to connect the various components of the air conditioning system.

Preferred embodiments of the invention are defined in the dependent claims, which are to be understood as an integral part of the present description.

Further features and advantages of the invention will become more apparent from the following detailed description of an embodiment of the invention, made with reference to the accompanying drawings, provided purely by way of illustration and not limitation, in which:
- Figure 1 shows a part of a heat pump air conditioning system comprising an interface assembly according to the invention;
- Figures from 2 to 4 are perspective views showing the interface assembly isolated from the air conditioning system of Figure 1;
- Figures 5 and 6 are sectional views of the interface assembly of Figures 2-4; and
- Figure 7 is a perspective view of a connection block of the interface assembly of Figures 2-6.

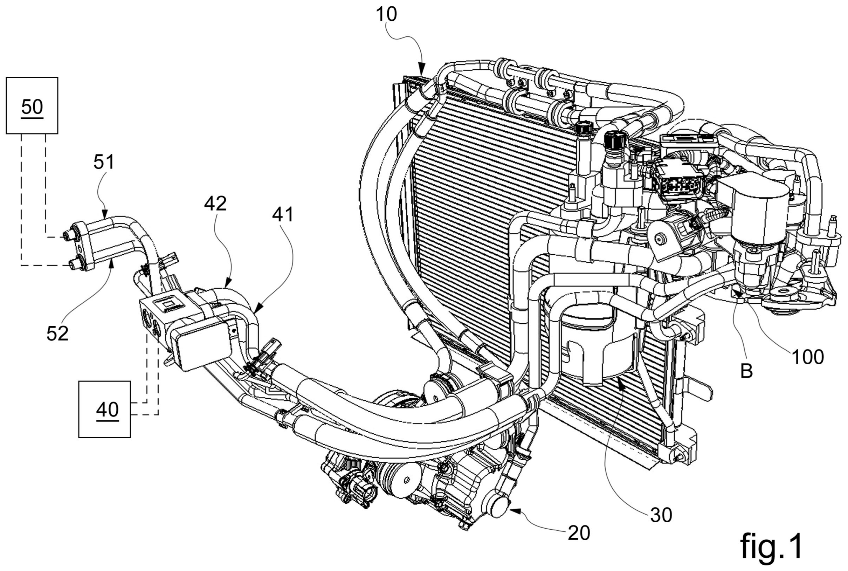

In Figure 1, a part of a heat pump air conditioning system is shown, more specifically the part of such a system which is intended to be installed inside the motor compartment of a motor vehicle. In Figure 1 some typical components of heat pump air conditioning systems are visible, in particular an outside heat exchanger 10 configured for heat exchange between a heat-transfer fluid of the air conditioning system and air of the external environment, a compressor 20 for circulation of the heat-transfer fluid, and an accumulator 30 positioned between the outside heat exchanger 10 and the compressor 20, and configured to receive the heat-transfer fluid and perform a separation between liquid and gas.

Further visible in Figure 1 are various valves for controlling the flow of heat-transfer fluid and the tubes which connect the various components of the heat pump air conditioning system. The specific arrangement of the valves and tubes depends on the architecture of the heat pump air conditioning system and is not essential to the invention. For the purposes of the present description only the two tubes 41 and 42 which connect the illustrated part of the air conditioning system to an evaporator 40, and the two tubes 51 and 52 which connect the illustrated part of the air conditioning system to an inner condenser 50 are mentioned. The evaporator 40 and the inner condenser 50, shown only diagrammatically in Figure 1, are positioned inside the passenger compartment of the motor vehicle, beyond a firewall partition (not shown) separating the passenger compartment from the motor compartment. The evaporator 40 conventionally serves to remove heat and moisture from the air intended to be introduced into the passenger compartment of the vehicle. The inner condenser 50 conventionally serves to release heat to the air intended to be introduced into the passenger compartment of the vehicle.

The air conditioning system comprises an interface assembly 100 which forms a fluidic connection between the passenger compartment side part and the motor side part of the heat pump air conditioning system. Advantageously, the interface assembly 100 also serves as a support for the accumulator 30 and for other components of the air conditioning system, in particular for some of the valves which serve for controlling the flow of heat-transfer fluid.

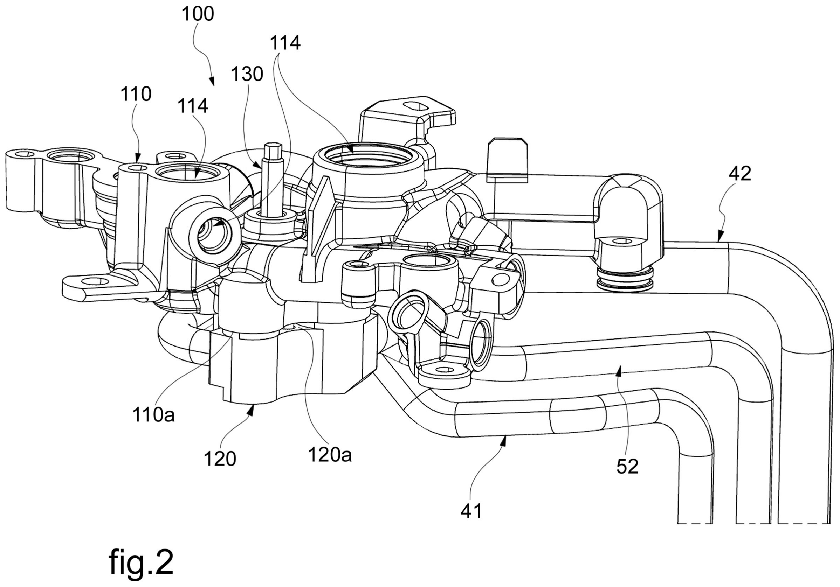

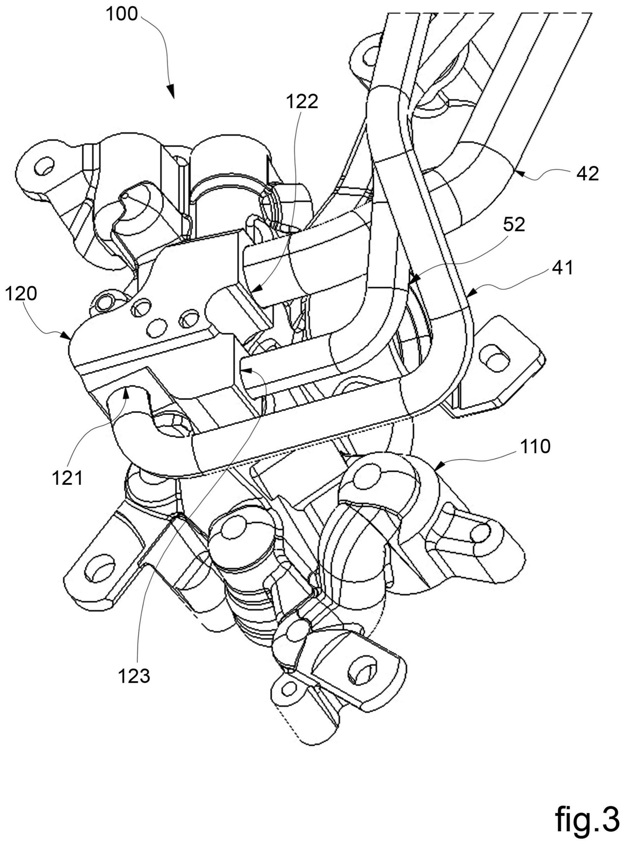

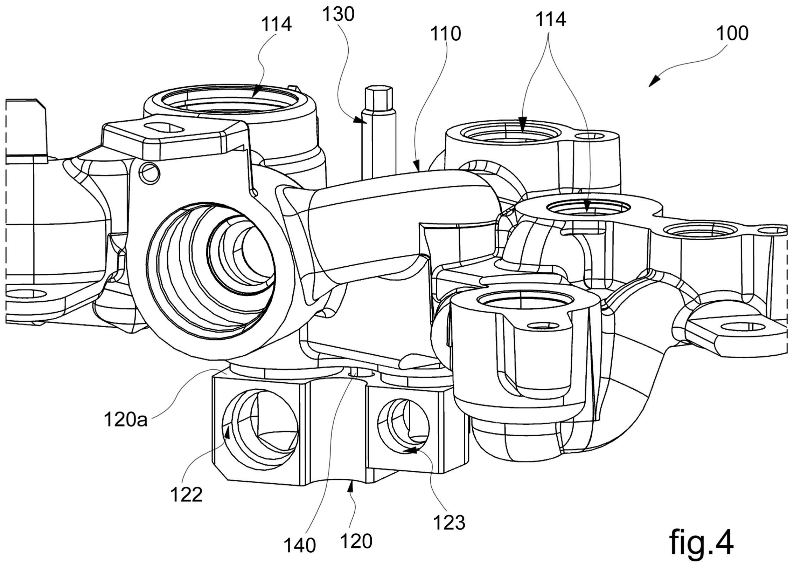

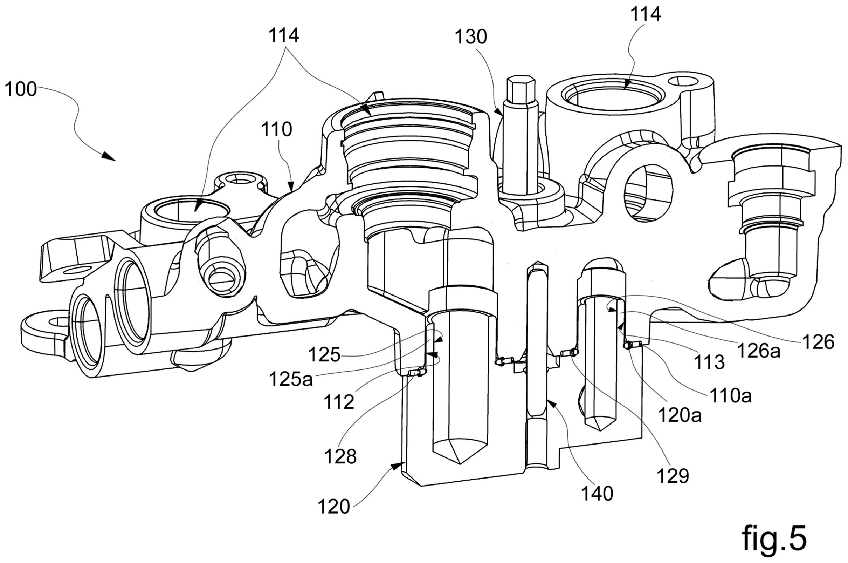

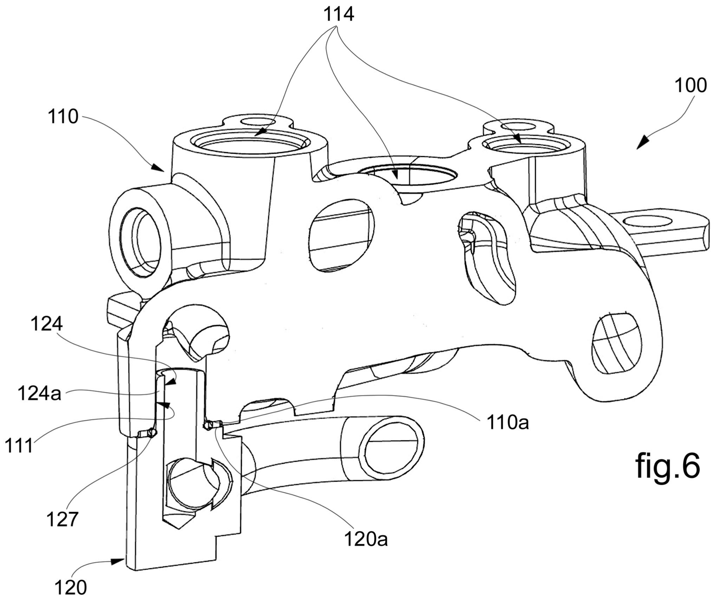

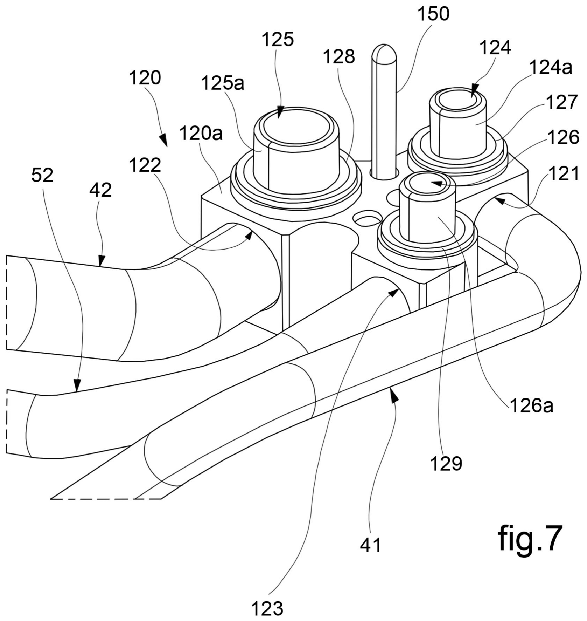

The interface assembly 100 is shown more clearly, without the accumulator 30 and the other aforementioned components, in Figures 2 to 6. The interface assembly 100 comprises a manifold body 110 having a plurality of fluid paths formed therein, and a connection block 120 fastened to the manifold body 110. The connection block 120 is also shown alone in the Figure 7. In particular, the connection block 120 is for fluidic connection with the passenger compartment side part of the heat pump air conditioning system, while the manifold body 110 is for fluidic connection with the motor side part of the heat pump air conditioning system. Advantageously, the manifold body 110 also serves as a support for the accumulator 30 and for the aforementioned valves which serve for controlling the flow of heat-transfer fluid.

The connection block 120 comprises a plurality of first fluid passage openings 121, 122, 123 and a plurality of second fluid passage openings 124, 125, 126 respectively connected to the first fluid passage openings 121, 122, 123. The tubes 41, 42 for connection to the evaporator 40, and one of the tubes, indicated with 52, for connection to the inner condenser 50, are respectively welded to the first fluid passage openings 121, 122, 123. The other tube connected to the inner condenser 50, indicated with 51, establishes a direct connection with the compressor 20, without involving the interface assembly 100. In the embodiment shown in the Figures, there are therefore three first fluid passage openings in the interface assembly 100. Such an embodiment is preferred because it allows optimizing the reduction of the space requirements of the air conditioning system. According to alternative embodiments, however, the tubes connected to the first fluid passage openings of the interface assembly 100 could be different than those indicated above, or the number of connections could be different.

The connection block 120 is a monolithic block within which flow paths are formed which connect the first fluid passage openings 121, 122, 123 to the second fluid passage openings 124, 125, 126. The second fluid passage openings 124, 125, 126 are arranged on an upper face 120a of the connection block 120 and are surrounded by respective collar protrusions 124a, 125a, 126a protruding from the upper face 120a of the connection block 120. A respective gasket 127, 128, 129 is arranged around each collar protrusion 124a, 125a, 126a. The gaskets 127-129 are arranged on the upper face 120a of the connection block 120, more precisely on respective ridges arranged around the collar protrusions 124a, 125a, 126a. Preferably, each of the gaskets 127-129 has a radially inner part made of elastomeric material and a radially outer part made of metallic material.

The manifold body 110 comprises a plurality of third fluid passage openings 111, 112, 113 and a plurality of fourth fluid passage openings, some of which have been indifferently indicated in the Figures with the same reference 114. The manifold body 110 is a monolithic body in which the third fluid passage openings 111, 112, 113 and the fourth fluid passage openings 114 are connected to the plurality of fluid paths obtained in the manifold body 110. The fourth fluid passage openings 114 are configured to be connected to the accumulator 30, to the compressor 20 and to the external heat exchanger 10, as well as to the various valves for controlling the flow of the heat-transfer fluid in the heat pump air conditioning system. The specific arrangement according to which the fourth fluid passage openings are connected to the aforesaid components depends on the architecture of the heat pump air conditioning system and is not essential to the invention.

The third fluid passage openings 111, 112, 113 are arranged on a lower face 110a of the manifold body 110 and are configured as holes for receiving the collar protrusions 124a, 125a, 126a of the second fluid passage openings 124, 125, 126. The number of third fluid passage openings 111, 112, 113 is therefore equal to the number of second fluid passage openings 124, 125, 126.

The connection block 120 and the manifold body 110 are fastened to each other by means of at least one screw 130, preferably only one, extending orthogonally to the upper face 120a of the connection block 120 and to the lower face 110a of the manifold body 110, through aligned holes formed in the connection block 120 and in the manifold body 110. As a result of such tightening, the gaskets 127-129 are pressed between the upper face 120a of the connection block 120 and the lower face 110a of the manifold body 110.

For the correct alignment between the connection block 120 and the manifold body 110 during assembly, centering pins may be provided, which are inserted in respective aligned holes obtained in the connection block 120 and in the manifold body 110.

The interface assembly 100 described above can be installed as follows.

Initially, the connection block 120, with the tubes 41, 42, 52 welded thereto, is positioned on a mounting bracket B included inside the motor compartment, using some centering pins (not shown) present on the bracket for the correct alignment of the components. On the connection block 120, the screw 130 has been preliminarily fastened. The mounting bracket B serves as a support for the interface assembly 100, and no fastening means are provided for tightening the interface assembly 100 to the mounting bracket B.

The manifold body 110 is then mounted on the connection block 120, finally tightening the screw.

## Claims

1. Interface assembly for a heat pump air conditioning system, comprising a manifold body (110) having a plurality of fluid paths formed therein, and a connection block (120) fixed to the manifold body (110),
wherein the connection block (120) comprises a plurality of first fluid passage openings (121, 122, 123) and a plurality of second fluid passage openings (124, 125, 126) respectively connected to the first fluid passage openings (121, 122, 123), wherein respective tubes (41, 42, 52) for connection to an evaporator (40) and to an inner condenser (50) of the heat pump air conditioning system are welded to the first fluid passage openings (121, 122, 123), wherein the second fluid passage openings (124, 125, 126) are arranged on an upper face (120a) of the connection block (120) and are surrounded by respective collar protrusions (124a, 125a, 126a) protruding from the upper face (120a) of the connection block (120), and wherein a respective gasket (127, 128, 129) is arranged around each collar protrusion (124a, 125a, 126a), on the upper face (120a) of the connection block (120),
wherein the manifold body (110) comprises a plurality of third fluid passage openings (111, 112, 113) and a plurality of fourth fluid passage openings (114), the third fluid passage openings (111, 112, 113) and the fourth fluid passage openings (114) being connected to the plurality of fluid paths formed in the manifold body (110), wherein the fourth fluid passage openings (114) are configured to be connected to an accumulator (30), to a compressor (20) and to an outside heat exchanger (10) of the heat pump air conditioning system, wherein the third fluid passage openings (111, 112, 113) are arranged on a lower face (110a) of the manifold body (110) and are configured as holes for receiving the collar protrusions (124a, 125a, 126a) of the second fluid passage openings (124, 125, 126),
wherein the connection block (120) and the manifold body (110) are tightened to each other by means of at least one screw (130) extending orthogonally to the upper face (120a) of the connection block (120) and to the lower face (110a) of the manifold body (110), so that the gaskets (127, 128, 129) are pressed between the upper face (120a) of the connection block (120) and the lower face (110a) of the manifold body (110).

2. Interface assembly according to claim 1, wherein the first fluid passage openings (121, 122, 123) are three and are welded to two tubes (41, 42) for connection to the evaporator (40) and to one tube (52) for connection to the inner condenser (50).

3. Interface assembly according to claim 1 or 2, wherein each of the gaskets (127, 128, 129) has a radially inner part of elastomeric material and a radially outer part of metallic material.
